Europäisches Patentamt

European Patent Office

Office européen des brevets

(11) Veröffentlichungsnummer: **0 396 533 B1**

# EUROPÄISCHE PATENTSCHRIFT

(45) Veröffentlichungstag der Patentschrift: **30.09.92**

(21) Anmeldenummer: **87904874.2**

(22) Anmeldetag: **30.07.87**

(86) Internationale Anmeldenummer:
**PCT/EP87/00415**

(87) Internationale Veröffentlichungsnummer:
**WO 88/03490 (19.05.88 88/11)**

(51) Int. Cl.⁵: **B60T 8/66**, B60K 23/08

(54) **ANTIBLOCKIERREGELSYSTEM.**

(30) Priorität: **12.11.86 DE 3638665**

(43) Veröffentlichungstag der Anmeldung:
**14.11.90 Patentblatt 90/46**

(45) Bekanntmachung des Hinweises auf die
Patenterteilung:
**30.09.92 Patentblatt 92/40**

(84) Benannte Vertragsstaaten:
**AT DE FR GB IT SE**

(56) Entgegenhaltungen:
**DE-A- 2 706 132**
**DE-A- 3 536 185**
**GB-A- 2 151 320**
**GB-A- 2 158 903**

(73) Patentinhaber: **ROBERT BOSCH GMBH**
**Postfach 30 02 20**
**W-7000 Stuttgart 30(DE)**

(72) Erfinder: **JONNER, Wolf-Dieter**
**Burgunderstrasse 25**
**W-7141 Beilstein-Schmidhausen(DE)**
Erfinder: **BRASCHEL, Volker**
**Goethestrahe 1**
**W-7100 Heilbronn(DE)**
Erfinder: **ROLLER, Dieter**
**Steinbeisstrasse 31**
**W-7143 Vaihingen/Enz(DE)**
Erfinder: **DEMEL, Herbert**
**Friedrichstrasse 30**
**W-7141 Möglingen(DE)**

(74) Vertreter: **Kammer, Arno**
**Postfach 10 56 08 Grenzhöfer Weg 36**
**W-6900 Heidelberg 1(DE)**

## Beschreibung

Stand der Technik

Es sind Kraftfahrzeuge bekannt, die von z.B. Heckantrieb auf Allradantrieb umschaltbar sind und bei denen die Antriebe der beiden Achsen durch Sperrung des zugehörigen Differentials miteinander starr kuppelbar sind. Zusätzlich können noch eine oder zwei Differentialsperren für die starre Verkupplung der Radantriebe einer Achse vorgesehen sein.

Aus der GB A 2 158 903 ist ein allradgetriebenes Fahrzeug bekannt, bei dem die Räder jeder Achse über Achsdifferentiale und die Achsantriebe über ein Zentraldifferential miteinander verbunden sind. Sowohl am Achsdifferential der Hinterräder als auch am Zentraldifferential sind Differentialsperren wirksam, die bei drohendem Radblockieren unwirksam gemacht werden.

Es sind außerdem Antiblockierregelsysteme für Kraftfahrzeuge bekannt, die zur Regelung des Radschlupfes eine Referenzgröße bilden, deren Verlauf dem der Fahrzeuggeschwindigkeit möglichst gut angenähert sein soll, wozu diese Referenzgröße unter Verwendung unterschiedlicher Steigung gebildet wird.

Die Bildung der Referenzgröße ist bei Fahrzeugen mit Allradantrieb und insbesondere bei zusätzlicher zugeschalteter Zentralsperre besonders schwierig.

Vorteile der Erfindung

Die Erfindung gibt ihrem Grundgedanken und in ihren Ausbildungen gemäß den Unteransprüchen Lösungsmöglichkeiten für das oben geschilderte Problem Dafür ist von Bedeutung, daß die Zentralsperre und evtl. verwendete weitere Differentialsperren sowie der Allradantrieb beim Anbremsen (Bremslichtschaltersignal) entsperrt bzw. aufgehoben werden.

Beschreibung der Zeichnung

In der Zeichnung ist ein Ausführungsbeispiel der Erfindung in prinziplicher Darstellung (Fig. 1-3) näher erläutert und anhand von Diagrammen der Fig. 4 und 5 werden verschiedene Lösungsmöglichkeiten anhand von zwei Fahrsituationen näher erläutert.

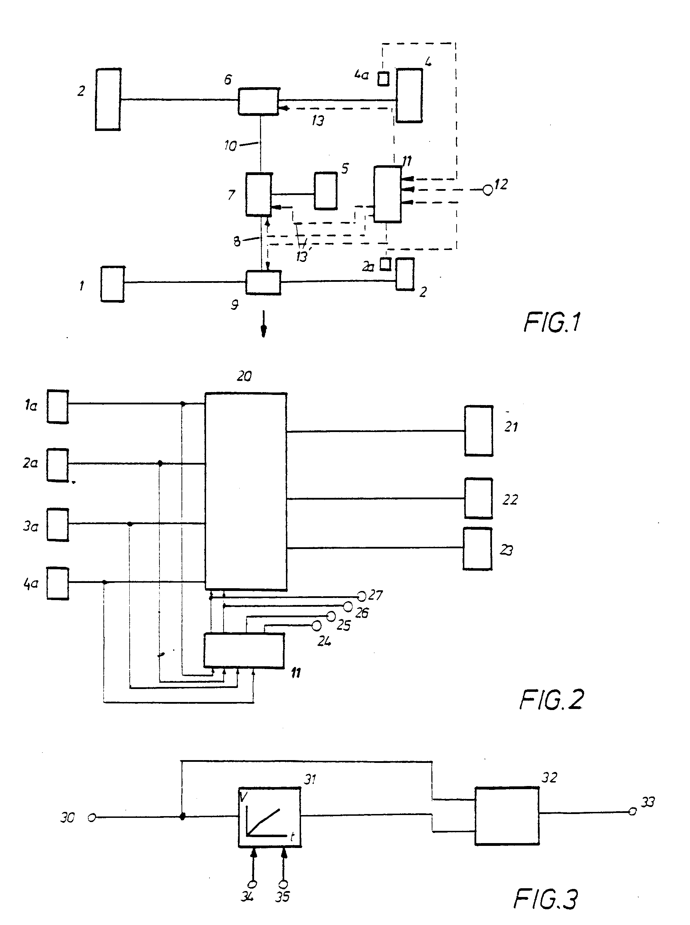

In Fig. 1 sind mit 1 und 2 die Vorderräder eines Kraftfahrzeuges bezeichnet und mit 3 und 4 seine Heckräder. Eine Antriebsmaschine 5 ist normalerweise über eine Antriebswelle 10 mit einem Differential 6 verbunden, über das die Heckräder 3 und 4 angetrieben werden.

Bei dem in Fig. 1 dargestellten Fahrzeug ist eine Umschaltung auf Allradantrieb vorgesehen, wozu ein weiteres Differential 7 so umschaltbar ist, daß zusätzlich zu der Welle 10 für den Heckantrieb auch eine Welle 8 angetrieben wird, über die und ein weiteres Differential 9 die Vorderräder angetrieben werden.

Die Wellen 8 und 10 sind durch eine im Block 7 enthaltene Zentralsperre starr an die Antriebsmaschine kuppelbar. Auch die Differentiale 6 und 9 können zuschaltbare Differentialsperren aufweisen.

Es ist hier angenommen, daß die Umschaltung auf Allradantrieb und die Zuschaltung der Sperren automatisch durch einen Schaltungsblock 11 bewirkt wird, dem den Radgeschwindigkeiten der Räder 1-4 entsprechende Signale zugeführt werden (nur durch Meßwertgaben 2a und 4a für die Räder 2 und 4 gezeigt). Entsprechend den festgestellten Radgeschwindigkeitsunterschieden erfolgt gesteuert über Leitungen 13 eine Umschaltung des Allradantriebs bzw. ein Einlegen der Sperren. Über die Klemme 12 wird das Bremslichtschaltersignal zum Entsperren der Sperren und Aufheben des Allradantriebs zugeführt.

Fig. 2 zeigt das zugehörige Antiblockierregelsystem, bestehend aus den vier Radgeschwindigkeitsmeßwertgebern 1a - 4a, einer Auswerteschaltung 20 und Bremsdrucksteuereinheiten 21 und 22 für die beiden Vorderräder 1 und 2 und einer Bremsdrucksteuereinheit 23 für die Heckräder 3 und 4.

Mit in Fig. 2 ist der Schaltungsblock 11 der Fig. 1 eingezeichnet, dem die Signale der Meßwertgeber 1a - 4a zugeführt werden und der die Umschaltsignale für den Allradantrieb und die Sperren über Klemmen 24 - 27 abgibt. Die Umschaltsignale an den Klemmen 26 (für die Allradumschaltung) und 27 (für die Zentralsperre) werden auch der Auswerteschaltung zur Beeinflussung der Bezugsgrößenbildung zugeführt.

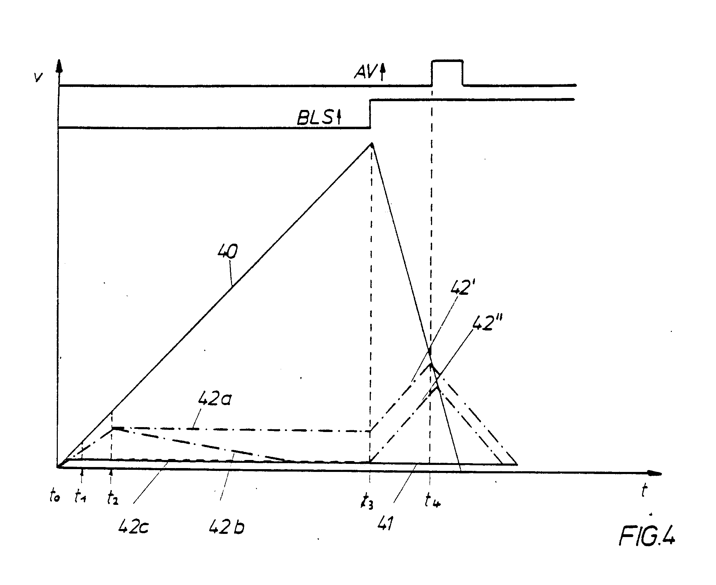

Fig 3 zeigt im Prinzip die Schlupfbildung in der Auswerteschaltung 20 der Fig 2. An einer Klemme 30 wird das Radgeschwindigkeitssignal eines der Meßwertgeber 1a - 4a zugeführt und einem Referenzgrößenbildner 31 und einem Komparator 32 zugeführt. Dem Referenzgrößenbildner 31 werden noch die Umschaltsignale für den Allradantrieb (Klemme 34) und für das Einlegen der Zentralsperre (Klemme 35) zugeführt.

Die von ihm erzeugte Referenzgröße wird im Komparator 32 mit dem Radgeschwindigkeitssignal verglichen und ein Druckabsenksignal an einer Klemme 33 erzeugt, wenn das Radgeschwindigkeitssignal das Referenzgeschwindigkeitssignal unterschreitet.

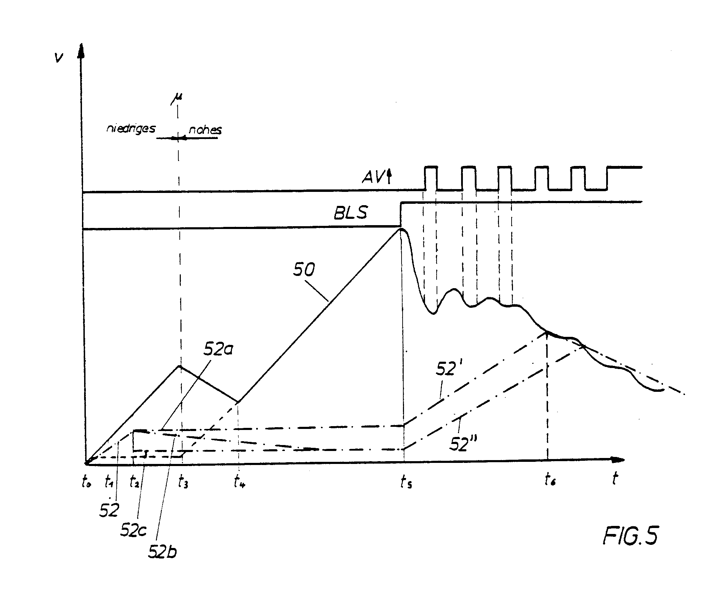

Das Diagramm der Fig. 4 zeigt die Arbeitsweise des Referenzgrößenbildners 31 der Fig. 3 dargestellt für die Fahrsituation "Anfahren an einem Berg mit durchdrehenden Reifen". Die Kurve 40 zeigt den Verlauf der Radgeschwindigkeit, die Kurve 41 den der Fahrzeuggeschwindigkeit und die Kurven 42 a, b, c Verläufe der Referenzgröße.

Bei $t_0$ wird die Fahrt gestartet, bei $t_1$ wird, da die Räder durchdrehen, (die Fahrzeuggeschwindigkeit 41 bleibt praktisch 0) automatisch auf Allradantrieb umgeschaltet. Hier ist der Fall dargestellt, daß die Steigung der Referenzgeschwindigkeit 42 bei nicht eingeschaltetem Allradantrieb und bei Allradantrieb begrenzt und gleich groß ist (z.B. 0,2g). Wegen des weiteren Durchdrehens der Räder erfolgt bei $t_2$ die Zuschaltung der Zentralsperre. Nun wird entweder die Referenzgröße konstant gehalten (Verlauf 42a) oder nur leicht kontiunierlich erhöht (nicht dargestellt) oder mit vorgegebener Steigung reduziert (Verlauf 42 b) oder auf eine minimale Geschwindigkeit gesetzt (Verlauf 42 c; hier etwa gleich der Fahrzeuggeschwindigkeit). Dieser Zustand bleibt erhalten, bis bei $t_3$ gebremst (siehe Bremslichtschaltersignal B L S) und damit die Radgeschwindigkeit reduziert wird. Bei $t_3$ wird die Zentralsperre entsperrt und auch der Allradantrieb unterbunden. Die Referenzgröße kann nun mit einer vorgegebenen Steigung (etwa 0,2 - 0,4-g) ansteigen (Verlauf 42' bei dem Verlauf 42a; Verlauf 42'' bei den Verläufen 42b und c). Bei $t_4$ unterschreitet das Radgeschwindigkeitssignal (40) die Referenzgröße (42') und es wird nun ein Druckabbausignal (AV) an der Klemme 33 erzeugt und gleichzeitig die Bezugsgröße mit einer vorgegebenen negativen Steigung von etwa 0,3 - 0,4 g reduziert.

Die hier zustande kommende Auslaßventilansteuerung tritt praktisch nur selten auf bzw. ist, - wenn sie auftritt -, sehr kurz im Gegensatz zu dem Fall, wenn man die Referenzgröße wie im Bereich $t_0$ - $t_2$ weiter ansteigen ließe. Es käme dann zu einer zeitweise drucklosen Bremse.

Bei der gemäß Verlauf 42 b, 42'' vorgeschlagenen Absenkung wird der geschilderte Vorteil noch verstärkt und im Falle des Verlaufs 42 c, 42'' wird das Ansprechen des Anlaßventils noch unwahrscheinlicher. Insbesondere beim letztgenannten Verlauf aber auch im Falle des Verlaufs 42 b bei entsprechender negativer Steigung kann die Referenzgeschwindigkeit auch bei einer Verzögerung des Fahrzeugs mit eingelegter Zentralsperre die Fahrzeuggeschwindigkeit nicht übersteigen.

Auch kann es hier bei kurzzeitigem Abschalten der Zentralsperre (z.B. zur Prüfung, ob das Einschalten der Sperre noch angebracht ist) zu keinem wesentlichen Übersteigen der Fahrzeuggeschwindigkeit durch die Referenzgeschwindigkeit kommen. Beim Verlauf 42 b, 42'' kann es auch bei Fehlsignalen, die eine eingelegte Zentralsperre signalisieren, nicht zu wesentlichen Verfälschungen der Referenz kommen.

In Fig. 4 ist unterstellt, daß die Steigung ohne Allradantrieb und mit Allradantrieb gleich ist. Man könnte an sich im Zeitraum $t_0$ bis $t_1$ mit einer größeren Steigung die Referenzgröße ansteigen lassen (wie bei A B S sonst üblich). Dann besteht jedoch die Gefahr, daß, wenn die Umschaltung auf Allradantrieb nicht erkannt wird, das Referenzsignal zu stark anwächst und ebenfalls eine lange Druckabbauphase zustande kommt.

In der Fig. 5 ist der Fall unterstellt, daß das Fahrzeug am Berg anfahren will, wobei die Räder anfänglich durchdrehen, aber dann auf Untergrund mit einem höheren $\mu$ gelangen. Mit 50 ist der Radgeschwindigkeitsverlauf und mit 52 (mit den verschiedenen Verläufen 52 a - c bzw. 52' und 52'') der Referenzgeschwindigkeitsverlauf (bzw. der entsprechende Signalverlauf) bezeichnet.

Bei $t_0$ soll angefahren werden, aber wegen durchdrehender Räder bleibt die Fahrzeuggeschwindigkeit 51 praktisch 0. Bei $t_1$ wird auf Allrad umgeschaltet, aber auch in diesem Beispiel wird die Steigung der Referenzgeschwindigkeit nicht geändert. Erst im Zeitpunkt $t_2$, bei Zuschaltung der Zentralsperre, wird einer der alternativ vorgesehenen -Verläufe 52 a - 42 c der Fig. 4 wirksam. Im Zeitpunkt $t_3$ gelangt das Rad auf hohes $\mu$ und wird zuerst verzögert, bis der Antriebsschlupf verschwindet ($t_4$). Hier hat die Fahrzeuggeschwindigkeit die Radgeschwindigkeit erreicht und beide erhöhen gemeinsam ihre Geschwindigkeit, bis bei $t_5$ die Bremse betätigt wird (Signal B L S ).

Zwischen $t_2$ und $t_5$ hat die Referenzgeschwindigkeit einen ausgewählten Verlauf der Verläufe 52 a - 52 c genommen. Ab $t_5$ steigt die Referenzgeschwindigkeit mit einer vorgegebenen positiven Steigung (etwa 0,2 - 0,4g) an; gleichzeitig wurden hier der Allradantrieb und die Sperren ausgeschaltet.

Ab $t_5$ entstehen durch die Radgeschwindigkeitsschwingungen aufgrund der Verzögerung Druckabbausignale AV bis dann ($t_6$) auch über den Schlupf Druckabbausignale entstehen.

Im Fall der Fig. 5 ist der Verlauf 52 a, 52' bzw. der nicht gezeichnete Fall des leichten Referenzanstiegs günstiger, weil die Referenz die Radgeschwindigkeit früher erreicht.

Die Anhebung der Referenz nach dem Bremseneinsatz ist im Falle der Fig. 5 vorteilhaft, im Falle der Fig. 4 nachteilig. Man wird deshalb einen Kompromiß, also eine geringe Steigung (z.B. 0,3 -0,4g) wählen.

**Patentansprüche**

1. Antiblockierregelsystem für ein Kraftfahrzeug, das auf Allradantrieb umschaltbar ist und vorzugsweise mit einer zusätzlich zuschaltbaren Differentialsperre (in 7) für die Antriebe der beiden Achsen (Zentralsperre) sowie gegebenenfalls mit wenigstens einer weiteren Differentialsperre (in 6 und/oder 9) für die Antriebe der Achse, ausgestattet ist (Achsdifferentialsperre), bei welchem Antiblockierregelsystem in einer Auswerteschaltung (20) aus den von Raddrehzahlmeßwertgebern (1a, 2a, 3a, 4a) abgegebenen Meßsignalen Ansteuersignale für den Rädern oder Radgruppen (1 bis 4) zugeordnete Bremsdrucksteuereinheiten (21 bis 23) zwecks Bremsdruckregelung gewonnen wirden, wobei in der Auswerteschaltung zur Radschlupfregelung eine Referenzgröße (42) gewonnen wird, die in einzelnen Phasen unterschiedliche Steigungen aufweist, dadurch gekennzeichnet, daß die Referenzgrößenbildung von der Umschaltung auf Allradantrieb und/oder der Zuschaltung der Differentialsperre (n) abhängig ist.

2. Antiblockierregelsystem nach Anspruch 1, dadurch gekennzeichnet, daß bei der Umschaltung bzw. Zuschaltung Schaltsignale gewonnen werden, über die die Referenzgrößenbildung beeinflußt wird.

3. Antiblockierregelsystem nach Anspruch 1 oder 2, dadurch gekennzeichnet, daß bei eingeschaltetem Allradantrieb und eingeschalteter Zentralsperre (in 7) die Referenzgröße (42a) konstant gehalten oder mit nur sehr geringer positiver Steigung verändert wird.

4. Antiblockierregelsystem nach Anspruch 1 oder 2, dadurch gekennzeichnet, daß bei eingeschaltetem Allradantrieb und eingeschalteter Zentralsperre (in 7) die Referenzgröße (42b) mit negativer Steigung abgesenkt wird.

5. Antiblockierregelsystem nach Anspruch 4, dadurch gekennzeichnet, daß während des Einschaltens der Zentralsperre (in 7) die Referenzgröße (42c) auf eine Minimalgeschwindigkeit, insbesondere die Geschwindigkeit 0, gesetzt wird.

6. Antiblockierregelsystem nach einem der Ansprüche 1 - 5, dadurch gekennzeichnet, daß bei Umschaltung auf Allradantrieb ohne zugeschaltete Zentralsperre (in 7) die Referenzgröße nur mit einer vorgegebenen Steigung den stärker zunehmenden Radgeschwindigkeiten folgt (Fig. 4, $t_1$ - $t_2$).

7. Antiblockierregelsystem nach einem der Ansprüche 1 - 6, dadurch gekennzeichnet, daß bei nicht zugeschaltetem Allradantrieb und nicht zugeschalteten Sperren (in 6, 7, 9) die Referenzgröße der zunehmenden Radgeschwindigkeit des (der) nicht angetriebenen Rades (Räder) ohne Verzögerung folgt.

8. Antiblockierregelsystem nach einem der Ansprüche 1 - 6, dadurch gekennzeichnet, daß bei nicht zugeschaltetem Allradantrieb und nicht zugeschalteten Sperre (in 6, 7, 9) die Referenzgröße der zunehmenden Radgeschwindigkeit mit einer vorgegebenen Steigung, insbesondere der gleichen Steigung wie bei zugeschaltetem Allradantrieb, folgt (Fig. 4, $t_0$ - $t_1$).

9. Antiblockierregelsystem nach einem der Ansprüche 1 - 8, dadurch gekennzeichnet, daß bei Betätigung (Fig. 4, $t_3$) der Bremse eine positive Steigung der Referenzgröße (32', 42a) die größer als die Steigung bei zugeschaltetem Allradantrieb ($t_1$ - $t_2$) ist, eingestellt wird, solange die Radgeschwindigkeit (en) größer als die Referenzgröße ist (sind).

10. Antiblockierregelsystem nach den Ansprüchen 1 - 9, dadurch gekennzeichnet, daß bei Radverzögerungen mit einer gegenüber dem Normalfall bevorzugt höheren Anschprechschwelle, ein erster Druckabbau (Regelbeginn) auch dann eingeleitet wird, wenn die sonst übliche Zusatzbedingung eines auftretenden Schlupfsignals ($V_{Rad}$ < Referenzgröße) nicht erfüllt ist, und zwar durch die Berechnung einer zusätzlichen Geschwindigkeitsabnahme bestimter Größe nach Austreten des Verzögerungssignals ($\Delta V$-Filterung).

**Claims**

1. Anti-lock control system for a motor vehicle which can be switched over to all-wheel drive and is preferably equipped with a differential lock (in 7), which can be switched on additionally, for the drives of both axles (central lock) and, possibly, with at least one further differential lock (in 6 and/or 9) for the drives of the axle (axle differential lock), in which anti-lock control system activation signals for brake pressure control units (21 to 23) associated with the wheels or wheel groups (1 to 4) are obtained for the purpose of brake pressure control in an analysis circuit (20) from the measurement signals emitted by wheel speed measurement pick-ups (1a, 2a, 3a, 4a), a reference parameter (42) being obtained for wheel slip control in the analysis circuit, which reference parameter has different slopes in individual phases, characterised in that the formation of the reference parameter depends on the switch-over to all-wheel drive and/or the switching on of the differential lock (n).

2. Anti-lock control system according to Claim 1, characterised in that during switch-over or switch on, switching signals are obtained by means of which the formation of the reference parameter is influenced.

3. Anti-lock control system according to Claim 1 or 2, characterised in that with all-wheel drive switched on and central lock switched on (in 7), the reference parameter (42a) is kept constant or is altered with only a very small positive slope.

4. Anti-lock control system according to Claim 1 or 2, characterised in that with all-wheel drive switched on and central lock switched on (in 7), the reference parameter (42b) is reduced with negative slope.

5. Anti-lock control system according to Claim 4, characterised in that when the central lock is being switched on (in 7), the reference parameter (42c) is set to a minimum speed, in particular the speed 0.

6. Anti-lock control system according to one of Claims 1-5, characterised in that on switching over to all-wheel drive without the central lock (in 7) being switched on, the reference parameter follows the more strongly increasing wheel speeds only with a specified slope (Fig. 4, $t_1$-$t_2$).

7. Anti-lock control system according to one of Claims 1-6, characterised in that with all-wheel drive not switched on and locks not switched on (in 6, 7, 9), the reference parameter follows the increasing wheel speed of the non-driven wheel (wheels) without delay.

8. Anti-lock control system according to one of Claims 1-6, characterised in that with all-wheel drive not switched on and with the lock not switched on (in 6, 7, 9), the reference parameter follows the increasing wheel speed with a specified slope, in particular the same slope as in the case where all-wheel drive is switched on (Fig. 4, $t_0$-$t_1$).

9. Anti-lock control system according to one of Claims 1-8, characterised in that on actuation (Fig. 4, $t_3$) of the brake, a positive slope of the reference parameter (32', 42a) is set which is larger than the slope with all-wheel drive switched on ($t_1$-$t_2$) as long as the wheel speed(s) is (are) larger than the reference parameter.

10. Anti-lock control system according to Claims 1-9, characterised in that in the case of wheel decelerations with a preferred higher response threshold relative to the normal case, a first pressure reduction (commencement of control) is initiated even when the otherwise usual additional condition of a slip signal appearing ($V_{wheel}$ < reference parameter) is not satisfied, this being done by calculating an additional reduction in speed of specific size after emergence of the deceleration signal ($\Delta$V filtering).

**Revendications**

1. Système antiblocage pour véhicule du type pouvant avoir toutes ses roues motrices et comportant de préférence un différentiel supplémentaire à blocage pouvant être commandé (7) servant à l'entraînement des deux essieux (blocage central) ainsi que le cas échéant au moins un autre différentiel à blocage (6 et/ou 9) entraînant l'essieu (différentiel d'essieu à blocage) un circuit d'exploitation (20) qui, à partir des signaux reçus de capteurs de vitesse de roue (1a, 2a, 3a, 4c) génère des signaux servant à commander des unités (21 à 23) de commande des pressions de freinage des roues ou des groupes de roues (1 à 4), une grandeur de référence (42), présentant à des phases différentes des pentes différentes, étant générée à l'intérieur du circuit d'exploitation en vue de contrôler le patinage des roues, caractérisé en ce que la formation de la grandeur de référence dépend de la mise en motricité de toutes les roues et/ou de la mise en service du blocage du différentiel.

2. Système antiblocage de roues selon la revendication 1, caractérisé en ce que la mise en service ou hors service engendre des signaux de commutation qui influent sur la formation de la grandeur de référence.

3. Système antiblocage de roues selon la revendication 1 ou 2, caractérisé en ce qu'en position de motricité totale et de blocage central (7) la grandeur de référence (42a) est maintenue constante ou est modifiée avec une course faiblement croissante.

4. Système antiblocage de roues selon la revendication 1 ou 2, caractérisé en ce qu'en position de motricité totale et de blocage central (7) la grandeur de référence (42b) évolue selon une pente décroissante.

5. Système antiblocage de roues selon la revendication 4, caractérisé en ce que, en position de blocage central (7), la grandeur de référence (42c) et réglée à une valeur minimum de la vitesse, en particulier la valeur zéro.

6. Système antiblocage de roues selon l'une des revendications 1 à 5, caractérisé en ce que, par passage à la motricité totale sans mise hors service de blocage central (7), la grandeur de référence ne suit, selon une pente donnée, que les vitesses des roues qui s'élèvent fortement (figure 4, $t_1$-$t_2$).

7. Système antiblocage de roues selon l'une des revendications 1 à 6, caractérisé en ce que, en situation de non motricité et de non blocage des différentiels (6, 7, 9), la grandeur de référence suit sans ralentir la vitesse croissante de la ou des roues non motrices.

8. Système antiblocage de roues selon l'une des revendications 1 à 6, caractérisé en ce que, en situation de non motricité et de non blocage des différentiels (6, 7a) la grandeur de référence suit la vitesse croissante de la roue selon une pente donnée, en particulier la même pente que dans le cas de motricité totale (figure 4, $t_0$-$t_1$).

9. Système antiblocage de roues, selon l'une des revendications 1 à 8, caractérisé en ce que l'action de freinage (figure 4, $t_3$) donne à la grandeur de référence (32', 42a) une pente positive supérieure à celle correspondant à la position de motricité totale ($t_1$ à $t_2$) aussi longtemps que la (ou les) vitesse de roue est (ou sont) supérieure à la grandeur de référence.

10. Système antiblocage de roues, selon les revendications 1 à 9, caractérisé en ce que, dans le cas de décélération des roues avec un seuil de réponse avantageusement plus élevé que dans le cas normal, une première réduction de pression (début de contrôle) est effectuée si la condition supplémentaire habituelle d'opposition d'un signal de patinage ($V_{rad}$ < grandeur de référence) n'est pas remplie, à savoir par le calcul d'une réduction supplémentaire de la vitesse de grandeur déterminée après disposition du signal de décélération ( $\Delta V$-filtrage).

FIG.1

FIG.2

FIG.3

FIG.4

FIG.5